## Europäisches Patentamt
## European Patent Office
## Office européen des brevets

(19)

(11) Veröffentlichungsnummer: **0 240 846**
**A2**

(12) # EUROPÄISCHE PATENTANMELDUNG

(21) Anmeldenummer: 87104415.2

(22) Anmeldetag: 25.03.87

(51) Int. Cl.³: **B 65 D 88/12**

(30) Priorität: 05.04.86 DE 3611837

(43) Veröffentlichungstag der Anmeldung:
14.10.87 Patentblatt 87/42

(84) Benannte Vertragsstaaten:
AT BE CH ES FR GB GR IT LI LU NL SE

(71) Anmelder: Stagars, Hans-Werner
Bevenroder Strasse 90A
D-3300 Braunschweig(DE)

(72) Erfinder: Stagars, Hans-Werner
Bevenroder Strasse 90A
D-3300 Braunschweig(DE)

(72) Erfinder: Amme, Karl-Christian
Okeraue 8
D-3300 Braunschweig(DE)

(74) Vertreter: Gralfs, Harro, Dipl.-Ing.
Am Bürgerpark 8
D-3300 Braunschweig(DE)

(54) **Befestigungs- und Verriegelungsvorrichtung für auf Fahrzeugen zu transportierende Behälter vom Boxpalettentyp.**

(57) Befestigungs- und Verriegelungsvorrichtung für auf Fahrzeugen zu transportierende Behälter vom Boxpalettentyp mit Gabeleingriffskanälen und mit länglichen Füßen, die an der Unterseite des Behälters jeweils im Bereich der vier Ecken befestigt sind. Befestigungsschienen auf/in der Ladefläche des Fahrzeuges bzw. auf/in der Oberseite der Behälter sind mit Öffnungen versehen, in die die Füße eingreifen. Die Füße (36,38) weisen jeweils einen sich parallel zu den Gabeleingriffskanälen (32) des Behälters (30) erstrecken-den senkrechten Steg (40) auf, der mit seinem oberen Rand (42) mit der Behälterunterseite verbindbar ist und der an seiner Unterseite mit beidseitig vorstehenden Flanschschenkeln (46,48) versehen ist. Die Befestigungsschienen (2) erstrecken sich im wesentlichen über die Tiefe des Behälters und sind im Querschnitt im wesentlichen U-förmig ausgebildet und mit zwei in Längsrichtung der Schienen in Abstand voneinander liegenden Abschnitten (50,56) versehen, in denen Hinterschneidungen bildende, sich aufeinander zu erstreckende Flanschen (10,12) an den Schenkelenden der Befestigungsschienen vorgesehen sind. Die hintersch-nittenen Abschnitte haben voneinander einen Abstand ($L_3$), der größer ist als die Länge ($L_5$) der Flanschschenkel (46,48) der Füße (36,38) am Behälter und liegen an einem Ende im Abstand ($L_1$) vom Ende der Befestigungsschiene. Es sind wei-ter Mittel (38) zur Verriegelung wenigstens eines der Füße des Behälters in/an der Befestigungsschiene vorgesehen. Für die Befestigung von Spanngurten sind in die hintersch-nittenen Abschnitte (50,56) einführbare Riegel (66) mit Ringösen (68) vorgesehen.

Fig.2

Grafs  Patentanwalt  Am Bürgerpark 8  D 3300 Braunschweig Germany

Am Bürgerpark 8
D 3300 Braunschweig, Germany
Telefon 05 31 - 7 47 98
Cable patmarks braunschweig

Hans-Werner Stagars

Bevenroder Str. 90A

3300 Braunschweig

G/WS - S 1091

Befestigungs- und Verriegelungsvorrichtung für auf Fahrzeugen zu transportierende Behälter vom Boxpalettentyp

Die Erfindung bezieht sich auf eine Vorrichtung für auf Fahrzeugen zu transportierende Behälter vom Boxpalettentyp nach dem Oberbegriff des Patentanspruches 1.

Bei den Behältern vom Boxpalettentyp handelt es sich um solche, deren Boden nach Art einer Palette ausgebildet ist, wobei im Boden im Normabstand zwei Eingriffskanäle für die Gabel eines Gabelstaplers vorgesehen sind. Die Behälter können dabei kastenförmig mit geschlossenen Wänden ausgebildet sein, wobei vorzugsweise an der Seite mit dem Gabeleingriff eine verschiebbare Öffnung vorgesehen ist. Die Behälter können aber auch als offene Gitterbehälter ausgebildet sein.

Bei einer bekannten Verriegelungsvorrichtung der gattungsgemäßen Art (DE-A 35 17 578) sind an der Unterseite des Behälters im des Behälters im Bereich der vier Ecken jeweils längliche Füße mit Rechteckquerschnitt befestigt, die sich quer zu den mit Querschlitzen versehenen Befestigungsschienen erstrecken und in diese Querschlitze eingreifen. Dabei sind weiter gesonderte Verriegelungsmittel in Form eines Drehriegels vorgesehen, die in benachbarte Schlitze der Befestigungsflanschen eingreifen. Befestigungs- und Verriegelungsvorrichtungen dieser Art haben den Nachteil, daß die normalerweise als Füße wirkenden Vorsprünge nur einen geringen Querschnitt haben und das Aufsetzen der Container auf die mit den Befestigungsschienen ausgerüsteten Fahrzeuge sowohl in Längsrichtung wie in Querrichtung mit großer Genauigkeit erfolgen muß. Nach dem Aufsetzen müssen die Behälter dann gegen Abheben durch die Drehriegel gesichert werden.

Aufgabe der Erfindung ist es, eine Befestigungs- und Verriegelungsvorrichtung der gattungsgemäßen Art so auszubilden, daß die Vorsprünge oder Füße mit wesentlich größeren Aufstandsflächen ausgerüstet werden können und das Aufsetzen und das anschließende Befestigen und Verriegeln der Behälter auf den mit Befestigungsschienen versehenen Fahrzeugen bzw. Behältern wesentlich weniger genaues Arbeiten des Fahrers des Gabelstaplers erfordert.

Diese Aufgabe wird gemäß der Erfindung gelöst durch die im kennzeichnenden Teil des Patentanspruches 1 herausgestellten Merkmale.

Zweckmäßige Ausgestaltungen sind Gegenstand der Unteransprüche.

Ein Ausführungsbeispiel der Erfindung ist nachstehend im einzelnen anhand der Zeichnung beschrieben. Es zeigt:

Fig. 1    die Draufsicht auf eine Befestigungsschiene,

Fig. 2    den Schnitt längs der Linie II-II in Fig. 1,

Fig. 3    den Schnitt längs der Linie III-III in Fig. 1,

Fig. 4    in einem Ausschnitt eines der hinterschnittenen Abschnitte der Befestigungsschiene eine Anordnung und Ausbildung des Behälterfußes,

Fig. 5    schematisch die Anordnung der Füße am Behälter,

Fig. 6    ein Befestigungselement zur Befestigung von Zurrgurten an der Befestigungsschiene.

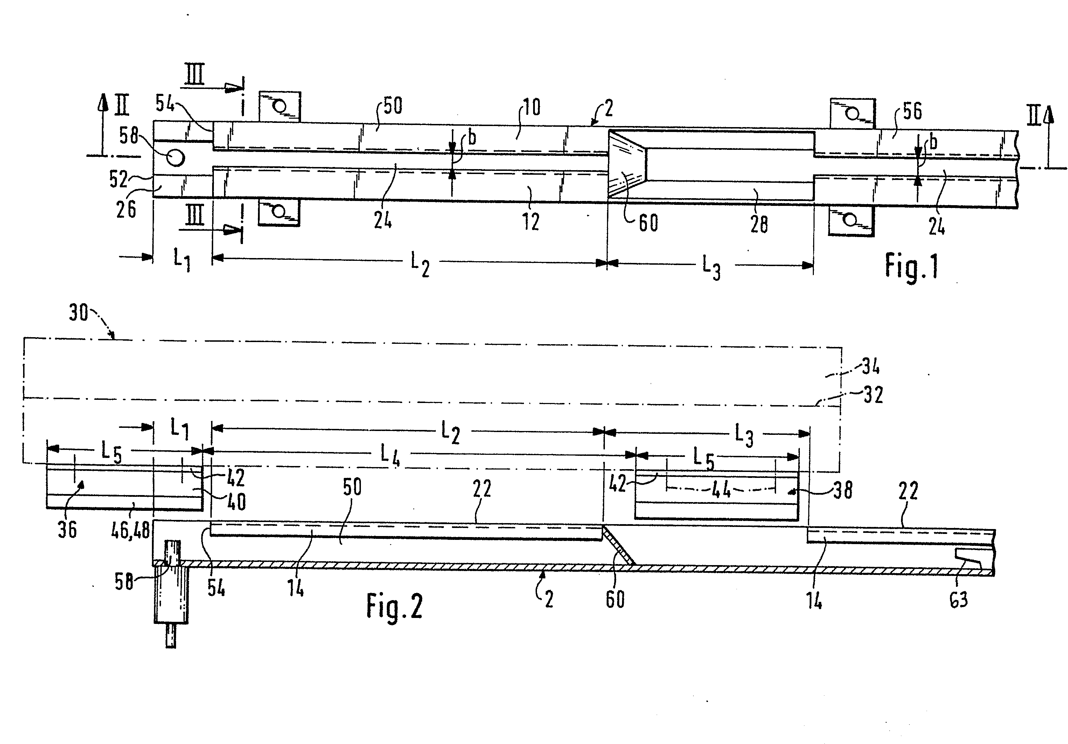

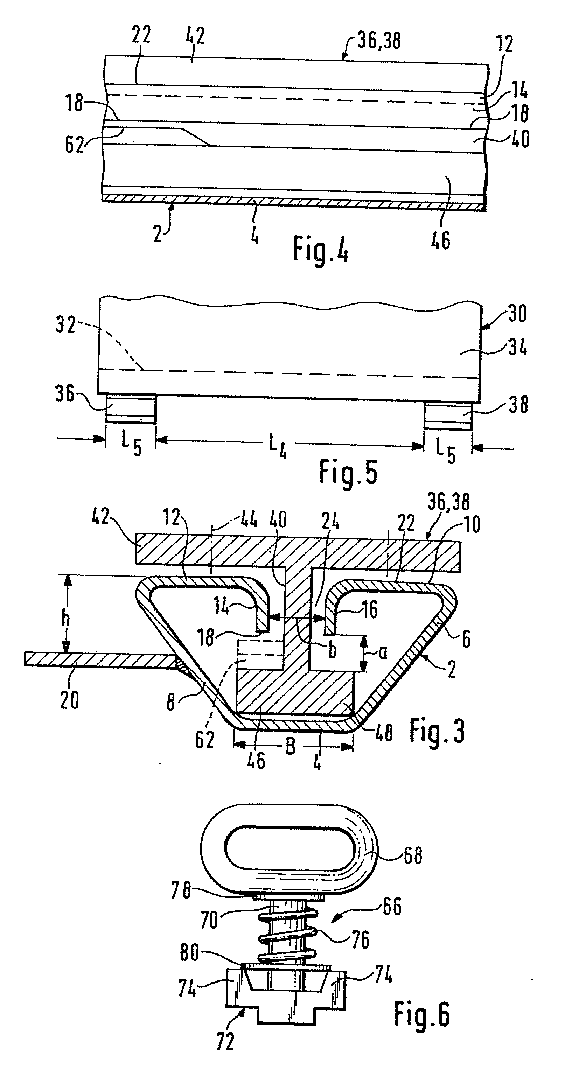

Die in den Fig. 1 bis 3 dargestellte Befestigungsschiene 2 weist, wie aus Fig. 3 ersichtlich, einen etwa U-förmigen Querschnitt auf mit einem horizontalen Steg 4, an die sich die beiden Schenkel 6 und 8 anschließen, die im dargestellten Ausführungsbeispiel beide unter einem Winkel nach außen gegen die Senkrechte auf den Steg geneigt sind. An die Schenkelenden schließen sich Flanschen 10 und 12 an, die sich aufeinander zu erstrecken und an ihren freien Rändern mit Abkantungen 14 und 16 versehen sind, deren unterer Rand 18 im Abstand vom Steg 4 liegt. Die Profile können aus Blech abgekantet oder rollgewalzt sein. Es können aber auch stranggepreßte Profile, beispielsweise aus Aluminium oder Aluminiumlegierungen vorgesehen werden. Wie in Fig. 3 links dargestellt, können an der Außenseite der Schenkel 6 bzw. 8 Befestigungsflanschen oder -schienen 20 vorgesehen werden, die beispielsweise von der Oberseite 22 der Profilflanschen 10 und 12 einen Abstand h Abstand h haben können, der der Bohlenhöhe eines Bohlenbelags eines Fahrzeuges sein kann. Das Profil kann dann als tragendes Profil in einem Bodenrahmen eines Fahrzeuges eingefügt werden. Die Befestigungsschienen können aber auch in oder auf der Oberseite eines Behälters angeordnet werden für die Befestigung eines weiteren Behälters in einem Stapel.

Bei dem beschriebenen Profil bilden die Flanschen 10 und 12, gegebenenfalls in Verbindung mit den Abkantungen 14 und 16, falls solche vorgesehen sind, Hinterschneidungen mit einem zwischen den Abkantungen 14 und 16 gebildeten Schlitz 24 mit einer Breite b quer zur Profillängserstreckung.

Wie in den Fig. 1 und 2 dargestellt, sind aus dieser Befestigungsschiene am linken Ende in einem Abschnitt über eine Länge L1 die Flanschen 10 und 12 mit den Abkantungen weggeschnitten. In gleicher Weise ist in einem Abstand L2 hiervon ein weiterer Abschnitt 28 mit einer Länge L3 vorgesehen, in der gleichfalls die Flanschen 10 und 12 mit den Abkantungen 14 bzw. 16 weggeschnitten sind.

Wie in Fig. 5 angedeutet, sind an der Unterseite eines Behälters 30 im Bereich der parallel zu den hier gestrichelt angedeuteten Gabeleingriffskanälen 32 liegenden Endwände 34 einem Abstand L4 zwei Füße 36 und 38 angeordnet, die eine Länge L5 haben.

Diese Füße sind im Querschnitt in Fig. 3 dargestellt. Die Füße 36 und 38 sind, grob gesprochen, mit einem I-Profil mit unterschiedlichen Flanschlängen ausgebildet. An dem Steg 40 schließt sich hier eine Flanschplatte 42 an, die mit Befestigungslöchern 44 versehen ist und mit der die Füße an der Unterseite des Behälters befestigt werden. Der gegenüberliegende Flansch weist zwei Flanschschenkel 46 und 48 auf, deren Breite B wesentlich größer ist als die Breite b des Schlitzes 24. Die Breite B kann der Breite des Steges 4 auf der Innenseite des Profils 2 entsprechen. Die Auflagekanten können abgerundet ausgebildet sein.

Bezogen auf die Abmessungen der Schienen ist der Abstand L4 der Füße am Behälter größer als die Länge L2 des hinterschnittenen Abschnittes 50 der Befestigungsschiene 2. Es ist weiter die Länge L3 des freigeschnittenen Abschnittes 28 der Befestigungsschiene größer als die Länge L5 der Füße, wobei L2 + L3 größer ist als L4 + L5.

Die Befestigungsschiene wird so in oder auf der Ladefläche eines Fahrzeuges befestigt, daß der Abschnitt 26 im Bereich einer freien Kante der Ladefläche liegt. Das Ende 52 der Befestigungsschiene kann beispielsweise bündig mit dem Rand der Ladekante liegen. Bei der Anordnung in oder auf der Oberseite eines Behälters, der an einer Breitseite mit einer Öffnung versehen ist, sollte der Abschnitt 26 dieser Breitseite zugewandt sein.

Bei den beschriebenen Abmessungen wird der Behälter 30, der in Fig. 2 gestrichelt dargestellt ist, mit dem Gabelstapler so über die Ladefläche geführt, daß die hinteren Füße 38 auf beiden Seiten über den ausgeschnittenen Abschnitten 28 der Befestigungsschienen liegen. Die vorderen Füße 36 befinden sich dann im Bereich des vorderen freigeschnittenen Abschnittes 26 vor dem angrenzenden Ende 54 eines hinterschnittenen Abschnittes 50. Wenn der Behälter vom Gabelstapler in diese Lage gebracht ist, wird der Behälter abgesenkt, wobei die Füße mit ihrer Aufstandsfläche zur Auflage auf dem Steg 4 der Befestigungsschiene kommen, wie in Fig. 3 dargestellt, oder unmittelbar über dem Steg liegen, in jedem Fall das Gewicht des Behälters noch vom Gabelstapler getragen wird. Durch Vorschieben der Gabel werden dann die Füße 36 und 38 in hinterschnittene Abschnitte 50 bzw. 56 der Befestigungsschiene eingeführt, wobei die Endlage durch einen Anschlag, beispielsweise im Bereich des hinterschnittenen Abschnittes 56 festgelegt werden kann. Nach Vollendung dieser Einschiebebewegung wird der Behälter vom Gabelstapler mit seinem Gewicht auf das Fahrzeug bzw. einen Behälter abgesetzt. Durch die Ausbildung der Füße ist der Behälter dann gegen Abheben und auch gegen Kippbewegungen gesichert, weil die Oberkanten der Flanschabschnitte 46 und 48 der Füße unterhalb der Abkantungen 14 und 16 des Profils liegen.

Um ein Herausgleiten des Behälters mit seinen Füßen aus der Befestigungsschiene zu verhindern, sind im Bereich des freigeschnittenen Abschnittes 26 Verriegelungsbolzen 58 vorgesehen, die z.B. durch den Steg der Befestigungsschiene hindurchragen und in der vorstehenden Stellung nach Fig. 2 in der Bewegungsbahn des angrenzenden Fußes des Behälters in Längsrichtung der Befestigungsschiene liegen. Die Verriegelung 58 kann federbetätigt sein und kann beispielsweise über einen unter Federspannung stehenden Schwenkhebel mit einem Exzenter zurückgezogen werden. Eine solche bekannte Riegelvorrichtung kann dabei selbstlösend ausgebildet sein. Es braucht dann lediglich zu Beginn einer Behälterentnahme der Riegel über den Betätigungshebel zurückgezogen zu werden. Beim Aufsetzen eines Behälters wird dann die Rückzugsvorrichtung für den Riegel automatisch gelöst, wenn der angrenzende Fuß des Behälters mit dem Riegel in Eingriff kommt. Nach dem Vorbeigleiten des Fußes bei der Einschiebbewegung springt der Riegel dann automatisch in seine wirksame Stellung. Die nach außen geneigten Schenkel 6 und 8 der Befestigungsschienen wirken als Einweiser quer zur Längserstreckung der Befestigungsschienen, wodurch die erforderliche Genauigkeit beim Anfahren der Befestigungsschienen erheblich vermindert wird. Auch in Längsrichtung der Befestigungsschienen kann eine Einweiserwirkung erzielt werden durch eine quer im Profil angeordnete Schrägwand 60, die beispielsweise am Ende des hinterschnittenen Abschnittes 50 angrenzend an den freigeschnittenen Abschnitt 28 vorgesehen sein kann. Diese Schrägwand 60 ist vom Ende des hinterschnittenen Abschnittes 50 weg gegen den Steg geneigt. Auf ihr kann der Behälter beim Einführen in die Befestigungsschiene in dessen Längsrichtung eingewiesen werden.

Abweichend von der Darstellung nach Fig. 3 können die Füße 36 und 38 auch so ausgebildet sein, daß sie mit der Unterseite der Flanschplatte 42 auf der Oberseite 22 der Flansche 10 und 12 der Befestigungsschiene aufliegen, und zwar entweder direkt oder aber auch unter Zwischenschaltung von in der Zeichnung nicht dargestellten Gleitern. In diesem Fall liegt dann der Fuß mit den beiden Flanschschenkeln 46 und 48 im Abstand über dem Steg 4 der Befestigungsschienen.

Der Abstand a zwischen der Unterkante der Abkantungen 14 und 16 und der Oberseite der Flanschschenkel 46 und 48 ist ein Maß für den Freiheitsgrad, der für den Gabelstapler beim Einfädeln zur Verfügung steht. Dieser Abstand ergibt aber auch eine Lose, um die der Behälter abgehoben werden oder aber um einen der Füße kippen kann. Um eine solche Kippbewegung zu verringern, können auf der Oberseite wenigstens eines der Flanschschenkel 46 bzw. 48 Verriegelungskeile 62 angeordnet sein, wie sie in Fig. 3 und 4 gestrichelt dargestellt sind, wobei Fig. 4 übrigens die Ausbildung zeigt, bei der die Flanschplatte 42 auf der Flanschoberseite der Befestigungsschiene aufliegt. Dieser Keil 62 kann so angeordnet sein, daß er an dem beim Einschieben hinten liegenden Ende der Füße angeordnet ist, so daß die Verriegelung erst im letzten Abschnitt der Einschiebbewegung wirksam wird.

Es können weiter am Ende wenigstens eines der hinterschnittenen Abschnitte 56 Keil- oder Schrägflächen 63 vorgesehen sein, die mit der Oberseite der Flanschschenkel der Füße zusammenwirken.

Bei Verwendung eines Strangpreßprofiles können übrigens statt der abgekanteten Schenkel 14 und 16 auch an den Enden der Schenkel 10 und 12 wulstförmige Verstärkungen vorgesehen sein, wodurch sich gegebenenfalls auch die Bauhöhe der Befestigungsschienen verringern kann.

Die Befestigungsschienen liegen vorzugsweise quer auf der Ladefläche eines Fahrzeuges. Sie können sich beispielsweise über die gesamte Breite der Ladefläche erstrecken, wobei dann spiegelbildlich zwei Hälften in einer Ausbildung entsprechend den Fig. 1 und 2 vorgesehen sein können, so daß von beiden Längsseiten der Ladefläche Behälter in die Befestigungsschienen eingeführt werden können.

Befestigungsschienen der beschriebenen Art in oder auf der Ladefläche eines Fahrzeuges bieten die Möglichkeit, Riegel als Befestigungspunkte für Zurrgurte für lose Güter oder Verpackungen auf der Ladefläche anzubringen. Ein solcher Riegel 66 ist in Fig. 6 dargestellt. Er weist eine ovale Ringöse 68 auf, an deren Unterseite eine Stange 70 befestigt ist. Am unteren Ende dieser Stange ist ein Riegelkopf 72 starr mit der Stange 70 verbunden. Dieser Riegelkopf ist im Querschnitt etwa U-förmig ausgebildet, wobei die inneren Abmessungen zwischen den Schenkeln 74 so gewählt sind, daß in das U-Profil des Riegelkopfes die Abkantungen 14 und 16 der Befestigungsschiene eingreifen können. Die Dicke des Riegelkopfes ist so gewählt, daß er in den Schlitz 24 der Befestigungsschiene einführbar ist, also etwas kleiner als dessen Breite b.

Auf der Stange 70 ist eine vorgespannte Druckfeder 76 angeordnet, die sich mit einem Ende gegen eine an der Unterseite der Öse 68 anliegende Scheibe 78 und am anderen Ende gegen eine Scheibe 80 abstützt. Die Scheibe 80 hat dabei einen solchen Durchmesser, daß sie auf den Enden der Schenkel des Riegelkopfes aufliegt.

Der beschriebene Riegel 66 wird mit dem Riegelkopf 72 in einen der hinterschnittenen Abschnitte der Befestigungsschiene eingeführt. Er kommt dabei mit der Scheibe 80 auf der Oberseite 22 der Flanschen 10 bzw. 12 zur Anlage. Mit der Öse 68 wird der Riegelkopf dann gegen die Federkraft so weit nach unten gedrückt, bis der Riegelkopf unterhalb der freien Enden der Abkantungen 14 und 16 drehbar ist. Nach einer 90°-Drehung wird die Befestigungsöse dann freigelassen und über die Feder wird der Riegel dann in der Befestigungsschiene verspannt. Ein durch die Öse gezogener Gurt ist dabei dann direkt gegen die Befestigungsschiene mit seiner Zugkraft abgestützt.

Riegel der genannten Art lassen sich an jeder beliebigen Stelle eines hinterschnittenen Abschnittes einer Befestigungsschiene der oben beschriebenen Art anbringen. Es ist darüber hinaus möglich, zwischen Befestigungsschienen für die Behälter solche für Riegel der beschriebenen Art anzubringen, die dann mit durchgehender Hinterschneidung ausgebildet sein können, mit denen es dann also möglich ist, an jeder beliebigen Stelle der Befestigungsschiene eine Gurtbefestigung anzusetzen. Auch solche Befestigungsschienen können als tragende Elemente der Fahrzeugladefläche dienen.

Ansprüche

1. Befestigungs- und Verriegelungsvorrichtung für auf Fahrzeugen zu transportierende Behälter vom Boxpalettentyp mit Gabeleingriffskanälen und mit länglichen Füßen, die an der Unterseite des Behälters jeweils im Bereich der vier Ecken befestigt sind und mit Befestigungsschienen auf/in der Ladefläche des Fahrzeuges bzw. auf/in der Oberseite der Behälter mit Öffnungen, in die die Füße eingreifen, dadurch gekennzeichnet, daß

die Füße (36,38) jeweils einen sich parallel zu den Gabeleingriffskanälen (32) des Behälters (30) erstreckenden senkrechten Steg (40) aufweisen, der mit seinem oberen Rand (42) mit der Behälterunterseite verbindbar ist und der an seiner Unterseite mit beidseitig vorstehenden Flanschschenkeln (46,48) versehen ist,

daß sich die Befestigungsschienen (2) im wesentlichen über die Tiefe des Behälters erstrecken und im Querschnitt im wesentlichen U-förmig ausgebildet sind und mit zwei in Längsrichtung der Schienen in Abstand voneinander liegenden Abschnitten (50,56) versehen sind, in denen Hinterschneidungen bildende, sich aufeinander zu erstreckende Flanschen (10,12) an den Schenkelenden der Befestigungsschienen vorgesehen sind, daß die hinterschnittenen Abschnitte voneinander einen Abstand ($L_3$) haben, der größer ist als die Länge ($L_5$) der Flanschschenkel (46,48) der Füße (36,38) am Behälter und an einem Ende im Abstand ($L_1$) vom Ende der Befestigungsschiene liegen,

und daß Mittel (38) zur Verriegelung wenigstens eines der Füße des Behälters in/an der Befestigungsschiene vorgesehen sind.

2.  Vorrichtung nach Anspruch 1, dadurch gekennzeichnet, daß wenigstens einer der Schenkel (6,8) der Befestigungsschiene (2) bezogen auf die Senkrechte auf den Steg (4) nach außen geneigt ist.

3.  Vorrichtung nach Anspruch 1 oder 2, dadurch gekennzeichnet, daß an der dem zweiten hinterschnittenen Abschnitt (56) zugewandten Rückseite des ersten hinterschnittenen Abschnittes (50), die im Abstand vom Ende der Befestigungsschiene liegt, eine schräge Querwandung (60) in der Befestigungsschiene (2) angeordnet ist, die in Richtung auf den zweiten Abschnitt gegen den Steg der Befestigungsschiene geneigt ist.

4.  Vorrichtung nach Anspruch 1, dadurch gekennzeichnet, daß die die hinterschnittenen Abschnitte (50,56) bildenden Flanschen (10,12) der Befestigungsschienen (2) an ihren einander zugewandten freien Rändern (14,16) zum Steg der Befestigungsschiene hin abgekantet sind.

5.  Vorrichtung nach Anspruch 1, dadurch gekennzeichnet, daß die Füße (36,38) an der Oberseite der Stege (40) mit Flanschplatten (42) versehen sind.

6.  Vorrichtung nach Anspruch 5, dadurch gekennzeichnet, daß die Stege (40) eine solche Höhe haben, daß die Füße mit der Unterseite der Flanschplatten (42) oder daran angeordneter Gleiter auf der Oberseite der Flansche (10,12) der hinterschnittenen Abschnitte (50,56) der Befestigungsschienen (2) anliegen.

7.  Vorrichtung nach Anspruch 1, dadurch gekennzeichnet, daß an der Oberseite der Flanschschenkel (46,48) der Füße (36,38) Verriegelungskeile (62) ausgebildet oder befestigt sind.

8. Vorrichtung nach Anspruch 1, dadurch gekennzeichnet, daß am Ende wenigstens einer der hinterschnittenen Abschnitte (50,56) Keil- oder Schrägflächen (63) vorgesehen sind, die mit der Oberseite der Flanschschenkel (46,48) der Füße (36,38) zusammenwirken.

9. Verriegelungsvorrichtung nach Anspruch 4, dadurch gekennzeichnet, daß wenigstens der freie Rand einer der Abkantungen (14,16) mit einer in Längsrichtung ansteigenden Schräge versehen ist.

10. Vorrichtung nach Anspruch 1, dadurch gekennzeichnet, daß ein Verriegelungsbolzen (58) vorgesehen ist, der durch den Steg (4) der U-förmigen Befestigungsschiene (2) in das Schienenprofil vorsteht.

11. Vorrichtung nach Anspruch 10, dadurch gekennzeichnet, daß der Verriegelungsbolzen (58) unter Federvorspannung steht und selbstlösend ausgebildet ist.

12. Vorrichtung nach Anspruch 10, dadurch gekennzeichnet, daß der Verriegelungsbolzen (58) am Eintrittsende der Befestigungsschiene (2) angeordnet ist.

13. Vorrichtung nach Anspruch 1, dadurch gekennzeichnet, daß in die hinterschnittenen Abschnitte (50,56) einführbare Riegel (66) mit Ringösen (68) für die Befestigung von Spanngurten vorgesehen sind.

14. Vorrichtung nach Anspruch 13, dadurch gekennzeichnet, daß der Riegel mit einem U-förmigen Riegelkopf (72) am Ende einer Stange (70) versehen ist, an deren anderem Ende die Ringöse (68) mit Längserstreckung quer zur Stangenachse befestigt ist, und daß auf der Stange eine Druckfeder (76) angeordnet ist, die mit ihrem dem Riegelkopf (72) zugewandten Ende gegen eine auf der Stange geführte Scheibe (80) anliegt, die unter der Federvorspannung gegen die Endflächen der Schenkel (74) des Riegelkopfes (72) anliegt.

Fig.1

Fig.2

1/2

0240846

Fig.4

Fig.5

Fig.3

Fig.6